# EUROPEAN PATENT APPLICATION

(11) **EP 1 464 926 A1**
(43) Date of publication of application: **06.10.2004**
(21) Application number: 04075659.5
(22) Date of filing: 02.03.2004
(51) Int. Cl.: G01F 1/10, G01F 15/00

(54) **Flow meter including lubrication device**

(30) Priority: 04.04.2003 NL 1023110
(71) Applicant: INSTROMET B.V., 7064 KA Silvolde (NL)
(72) Inventor: Heusinkveld, Hendrik Johan, 7091 ZW Dinxperlo (NL)
(74) Representative: De Hoop, Eric

(57) **Abstract**

Flow meter for measuring a flowing first fluid in a pipe, particularly for measuring the flow rate of a gas flowing through the pipe, comprising:
a measuring body that is bearing mounted in a meter housing and drivable by the first fluid,
a lubrication device for lubricating the bearing of the measuring body, wherein the lubrication device comprises an oil reservoir, an oil pump, an oil supply pipe to the bearing and a control device for it, and wherein the lubrication device is attached to the meter housing.

## Description

The invention relates to a flow meter for measuring a flowing fluid in a pipe, particularly for measuring the flow rate of a gas flowing through the pipe, wherein the flow meter comprises a measuring body driven by the flow.

For accurate operation of said flow meter it is of importance that the motion of the measuring body driven by the flow is not hindered. The bearing of the moving parts in the flow meter needs to be lubricated regularly to that end. Up until now it has been common practice to ensure lubrication by means of an oil pipe which runs to the flow meter from an oil pump that has been positioned at a distance from the flow meter. Such a set-up has the drawback that the set-up requires installation actions when placing the flow meter and then is damage prone.

It is an object of the present invention to improve on this.

From a first aspect the invention to that end provides a flow meter for measuring a flowing first fluid in a pipe, particularly for measuring the flow rate of a gas flowing through the pipe, comprising:
a measuring body that is bearing mounted in a meter housing and drivable by the first fluid,
a lubrication device for lubricating the bearing of the measuring body, wherein the lubrication device comprises an oil reservoir, an oil pump, an oil supply pipe to the bearing and a control device for it, and wherein the lubrication device is attached to the meter housing.

By integrating the control device a lubrication device is obtained that operates independently and which only needs a connection for exciting the oil pump. Such an independently operating lubrication device may for instance periodically activate the oil pump for lubricating a bearing of the measuring body and is highly suitable for use at locations in the pipe that are remote or difficult to reach.

Moreover by placing the lubrication device on the meter housing, the installation of the flow meter and its accessories is facilitated. For instance fewer long oil pipes are necessary due to which the set-up becomes less damage prone. Furthermore the lubrication device may at least largely be mounted on the meter housing before the flow meter is placed in the pipe, due to which fewer installation actions are necessary when placing the flow meter in the pipe.

In an embodiment of the flow meter according to the invention the control device is connected to a read-out device of the flow meter for receiving data from the read-out device. Such a read-out device translates the motion of the measuring body to the desired quantity such as for instance the flow rate of the fluid flowing through the pipe. The read-out device may furthermore be provided with a display device for displaying for instance the current value of the desired quantity. At least a part of the control device, such as for instance the control electronics, preferably is integrated in the read-out device.

Preferably the control device is further adapted for controlling the lubrication device depending on the data from the read-out device, preferably the flow rate of the first fluid. As a result of this coupling the control of the lubrication device can be related to the quantity of fluid that has flowed through the flow meter, and thus to the quantity of motion the measuring body has carried out. In this way an optimal lubrication can be achieved.

In an embodiment of the flow meter according to the invention the oil pump comprises means for a pneumatic and/or hydraulic excitation of the oil pump by a second fluid. Preferably the oil pump is excitable by the first fluid; the second fluid in this case is the same as the first fluid. As a result an extra connection for exciting the oil pump is no longer necessary.

In that case is advantageous that the meter housing comprises a take-off point for taking away a quantity of the first fluid. Preferably the take-off point is situated near the lubrication device.

Advantageously the take-off point is placed upstream from the measuring body. This is particularly advantageous when the supply point of lubrication oil on the meter housing is placed downstream from the measuring body. The lubrication device can then be placed between the take-off point and the supply point, as a result of which the pipes from the take-off point to the lubrication device and from the lubrication device to the supply point can be short.

Preferably fluid that excites the oil pump is gaseous.

In a first further development of the flow meter according to the invention the lubrication device comprises a pressure controller for regulating the pressure of the fluid that excites the oil pump. For a gaseous fluid the pressure controller, preferably, comprises a reducing valve. The pressure controller ensures the right pressure of the fluid for exciting the oil pump. As a result the lubrication device depends less on the pressure and/or pressure variations of the fluid.

In a second further development of the flow meter according to the invention the means for regulating the supply of the fluid that excites the oil pump comprises a switch valve. Preferably a pneumatically operating switch valve.

In a third further development of the flow meter according to the invention the oil reservoir comprises a measuring device for measuring the level of the oil in the oil reservoir. Preferably the measuring device for measuring the oil level comprises a float level indicator. Preferably the measuring device comprises means for giving a signal to the control device when the oil level in the oil reservoir it too low. As a result of receiving a signal that the oil level in the oil reservoir is too low, the control device may for instance stop the oil pump and/or generate a warning signal.

In a fourth further development of the flow meter according to the invention, the oil reservoir comprises a take-off point for oil for taking away oil from the oil reservoir for lubricating the bearing of the measuring body, wherein the take-off point of oil is placed at a distance from the lowest level of the oil reservoir. Because the take-off point for oil is not placed at the lowest level of the oil reservoir, it is at least largely prevented that dirt and condensate in the oil that settle on the bottom of the oil reservoir, end up in the oil pump.

Preferably the oil reservoir comprises a draining point for draining oil from the oil reservoir, wherein the draining point is placed at least nearly at the lowest level of the oil reservoir. By means of this draining point dirt and the condensate that settle on the bottom of the oil reservoir can be removed from the oil reservoir.

In an embodiment the flow meter according to the invention comprises a rotating measuring device. Preferably the flow meter comprises a rotor meter or a turbine meter.

From a second aspect the invention provides a lubrication device for a flow meter for measuring a flowing first fluid in a pipe, particularly for measuring the flow rate of a gas flowing through a pipe, wherein the flow meter comprises a measuring body that is bearing mounted in a meter housing and that is drivable by the first fluid, and wherein the lubrication device comprises an oil reservoir, an oil pump, an oil supply pipe to the bearing and a control device for it for lubricating the bearing of the measuring body, and wherein the lubrication device is attached to the meter housing.

Preferably the lubrication device forms a package that can be mounted as one unity on the meter housing of the flow meter.

From a third aspect the invention provides a flow meter for measuring a flowing first fluid in a pipe, particularly for measuring the flow rate of a gas flowing through a pipe, comprising:
a measuring body that is bearing mounted in a meter housing and drivable by the first fluid,
a lubrication device for lubricating the bearing of the measuring body, wherein the lubrication device comprises an oil reservoir, an oil pump, an oil supply pipe to the bearing and a control device for it, and wherein the oil pump comprises means for a pneumatic and/or hydraulic excitation of the oil pump by the first fluid.

The invention will be elucidated on the basis of an exemplary embodiment shown in the attached drawings, in which:
Figure 1 shows a view of a turbine gas meter provided with a lubrication device according to the invention;
Figure 2 shows a further view of a turbine gas meter provided with a lubrication device according to the invention;
Figure 3 shows a cross-sectional view of the lubrication device according to the invention; and
Figure 4 shows a view of the turbine gas meter of figure 2, wherein an embodiment of the control device is schematically shown.

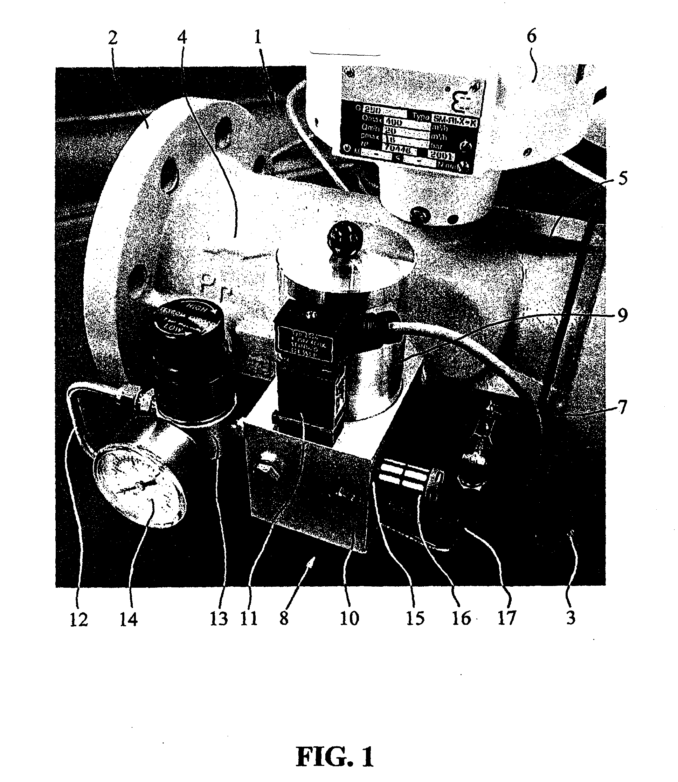

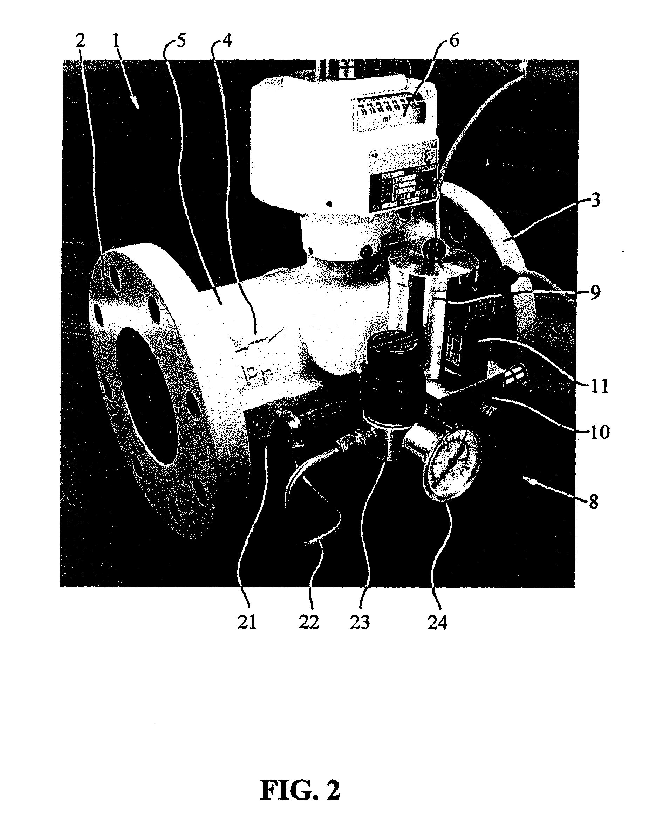

The flow meter according to the exemplary embodiment as shown in figure 1, regards a turbine meter 1 which at both its ends is provided with a flange 2, 3 for attaching the flow meter 1 in a pipe. The turbine meter has to be placed in the pipe such that the arrow 4 indicated on the meter housing 5, points in the flow direction of the fluid to be measured. Within the meter housing 5 there is a turbine wheel (not shown) which is placed in the meter housing in the known manner, and which can be driven by the fluid to be measured flowing through the meter housing. The number of revolutions of this turbine wheel is practically proportional to the fluid speed and therefore to the quantity of fluid flowing through per unit of time. Via a gear transmission a rotating motion of the turbine wheel is transferred to a roll counter 6 as shown in figure 2. The roll counter 6 shows the total quantity of fluid that has flowed through in units of volume. The meter housing 1 is furthermore provided with an inlet 7 for supplying lubrication oil to the inside of the housing 5 of the flow meter 1. At the inside of the housing 5 lubrication pipes have been placed in a known manner which pipes are connected to the connection point 7 and which distribute the lubrication oil supplied at connection point 7 to the moving parts of the flow meter for lubricating its bearing.

Figure 1 furthermore shows a lubrication device 8 that is attached to the meter housing 5. The lubrication device comprises an oil reservoir 9, an oil pump 10 and control device that comprises a valve 11. The oil pump 10 is pneumatically excitable, and therefore is connected to a supply pipe 12, which supplies a gaseous excitation fluid (second fluid) to the oil pump 10. For exciting the oil pump 10 use may for instance be made of compressed air. Between the pipe 12 and the oil pump 10 a pressure controller 13 is placed for setting the correct pressure of the excitation fluid for exciting the oil pump 10. The pressure controller 13 is provided with a pressure meter 14 on which the set pressure for exciting the oil pump 10 can be read. Furthermore the oil pump 10 is provided with a relief 15 provided with a sound muffler 16 for relieving the used fluid for exciting the oil pump 10.

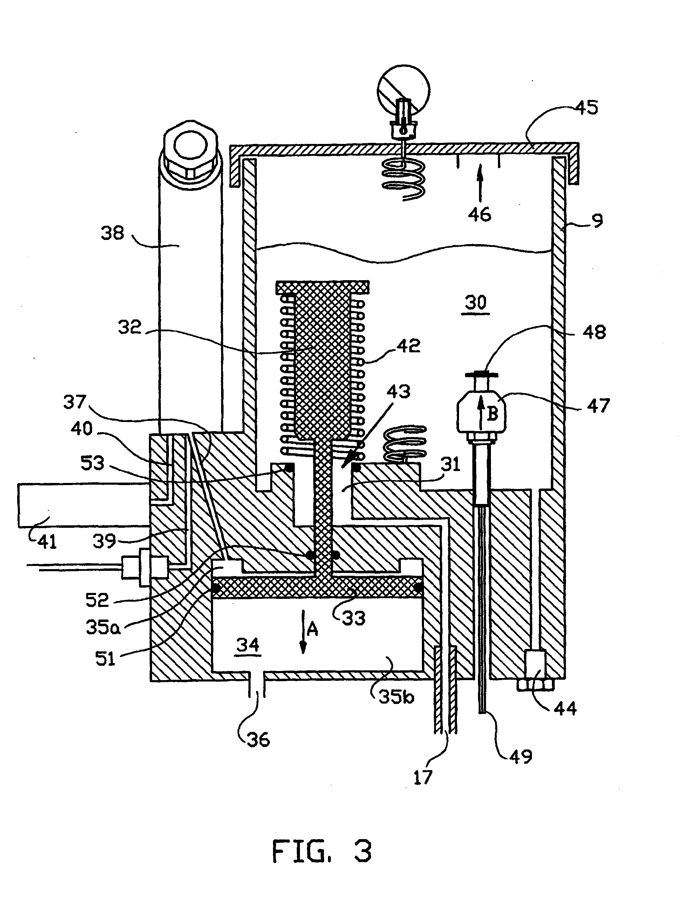

In a second exemplary embodiment such as shown in figure 2, the fluid to be measured that flows through the meter housing 5, is used for exciting the oil pump 10. To that end the meter housing 5 is provided with a take-off point 21 for taking a quantity of fluid to be measured away from the meter housing 5. The take-off point 21 is placed at the upstream side of the meter housing 5. The take-off point 21 is connected to the oil pump 10 by means of a pipe 22. In this exemplary embodiment as well a pressure controller 23 is placed between the pipe 22 and the oil pump 10 which pressure controller is provided with a pressure meter 24 for setting the pressure for exciting the oil pump 10. The oil pump 10 is connected to the inlet 7 by means of an oil pressure pipe 17. Said oil pressure pipe 17 is placed in the exemplary embodiment as shown in figure 2 (not shown) in accordance with the exemplary embodiment as shown in figure 1. The operation of the lubrication device 8 according to the invention will be further discussed below on the basis of figure 3.

A schematic cross-sectional view of the lubrication device according to the invention is shown in figure 3. The lubrication device 8 is provided with an oil reservoir 9 that is at least partially filled with oil 30. The oil reservoir 9 is connected to a displacement chamber 31 so that oil 30 may flow from the reservoir 9 into the displacement chamber 31. The displacement chamber 31 is connected to the oil pressure pipe 17 by means of a pipe. The lubrication device 8 is furthermore provided with a plunger 32 which is movably placed in the lubrication device 7. The plunger 32 is movable between a first position (as drawn in figure 3) wherein the plunger 32 is placed for allowing oil 30 in from the reservoir 9 to the displacement chamber 31, and a second position in which the plunger has slid into the displacement chamber 31 in the direction A (not shown). During this sliding of the plunger 32 into the displacement chamber 31, oil present in the displacement chamber 31 is pressed into the pressure pipe 17, and via said oil pressure pipe 17 to the flow meter and the moving parts of the bearing to be lubricated. Preferably a non-return valve is included in this oil pressure pipe 17. The plunger 32 and the displacement chamber 31 together form the oil pump of the lubrication device 8.

For driving said oil pump, the plunger is coupled to a piston 33. The piston 33 is placed in a piston housing 34 and divides the piston housing into a first part 35a and a second part 35b. The second part 35b is connected to the ambient via an opening 36. The first part 35a is connected to the valve 38 via a pipe 37. On the other side the valve is further connected to a supply pipe 39 and a discharge pipe 40 for the excitation fluid, wherein the discharge pipe 40 is provided with a sound muffler 41. The valve 38 serves as control device for the oil pump 31, 32. It operates as follows:

The valve 38 can be switched in a first and second position. When the valve 38 is switched to the first position, the supply pipe 39 is connected to the pipe 37. As a result the pressure as set in the supply pipe 39 enters the first part 35a of the piston chamber 34. The size of this pressure is set such that it pushes the piston 33 in the direction A counter to the pressure of the return spring 42 and the ambient pressure. The piston 33 will take along the plunger 32 in this motion, which plunger subsequently slides into the displacement chamber 31 due to which the oil 30 in the displacement chamber 31 is pressed into the oil pressure pipe 17.

Subsequently the valve 38 is switched to the second position, wherein the pipe 37 is coupled to the discharge pipe 40. The gas that is present under pressure in the first part 35a of the piston housing 34b, may escape via the pipe 37 and the discharge pipe 40 with sound muffler 41 to the surroundings. The return spring 42 pushes the plunger 32 back to the first position. The piston 33 then slides back to the first position (in opposite direction of the direction A), after which the cycle may be repeated.

For the proper operation of the oil pump the lubrication device as shown in figure 3 is furthermore provided with the sealings 51, 52 and 53.

The inlet 43 for the oil 30 to the displacement chamber 31 is situated above the lowest level of the oil reservoir 9. A draining point 44 is placed at the lowest level of the oil reservoir 9.

The oil reservoir 9 is furthermore provided with a lid 45 that can be taken off from the oil reservoir 9 in order to refill the oil reservoir 9. The lid 45 may be provided with a window 46 for visual inspection of the oil reservoir.

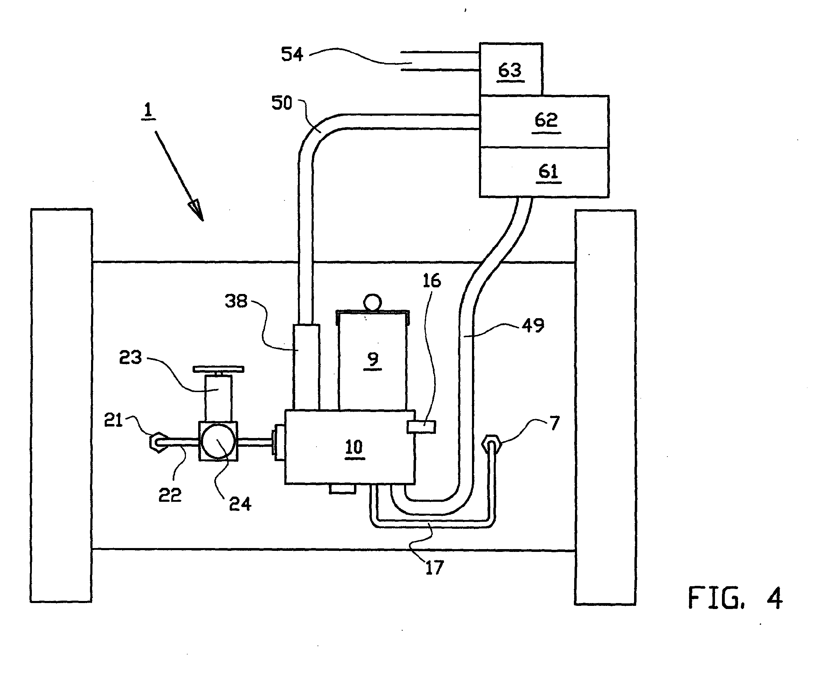

Finally the lubrication device 9 as shown in figure 3 is provided with a float level indicator 47 for checking the oil level in the oil reservoir 9. The float level indicator 47 is designed as a hollow float level indicator body and is subjected to an upward force (direction B) by the oil 30. When the oil level in the oil reservoir 9 becomes too low, the float level indicator 47 operates a switch 48, such as for instance a "reed contact", as a result of which a signal is given via the signal line 49, to for instance be able to detect from a distance that the oil has run out. On the other hand, the signal may also be given to the control device such as shown in figure 4.

The control device such as schematically shown in figure 4 comprises a first part 61 that is connected via the signal line 49 to the float level indicator switch in the oil reservoir 9, for reading the float level indicator position. The control device further comprises a second part 62 that is connected to the valve 38 via a signal line 50 for controlling said switch valve 38. The control device finally is provided with an interface 53 for instance for remote communication via a signal line 54 or wireless communication, or for exchanging data with the read-out device. The first part 51, second part 52 and the interface 53 may be built in into the read-out device.

The exemplary embodiments described above are adapted to be excited by an excitation fluid that is of such a nature as to be discharged to the surroundings without problems. To that end the lubrication device is provided with a relief for relieving the used fluid to the surroundings.

However, when the excitation fluid is of such a nature that it cannot be discharged to the surroundings, the excitation fluid used can be discharged via a relief pipe.

## Claims

1. Flow meter for measuring a flowing first fluid in a pipe, particularly for measuring the flow rate of a gas flowing through the pipe, comprising:
a measuring body that is bearing mounted in a meter housing and drivable by the first fluid,
a lubrication device for lubricating the bearing of the measuring body, wherein the lubrication device comprises an oil reservoir, an oil pump, an oil supply pipe to the bearing and a control device for it, and wherein the lubrication device is attached to the meter housing.

2. Flow meter according to claim 1, wherein the control device is connected to a read-out device of the flow meter for receiving data from the read-out device.

3. Flow meter according to claim 2, wherein the control device is adapted for controlling the lubrication device depending on the data from the read-out device, which data from the read-out device preferably comprise the flow rate of the first fluid.

4. Flow meter according to claim 1, 2 or 3, wherein the oil pump comprises means for a pneumatic and/or hydraulic excitation of the oil pump by a second fluid.

5. Flow meter according to claim 1, 2 or 3, wherein the oil pump comprises means for a pneumatic and/or hydraulic excitation of the oil pump by the first fluid, wherein the meter housing preferably comprises a take-off point for taking a quantity of the first fluid away, which take-off point preferably is placed upstream from the measuring body.

6. Flow meter according to claim 4 or 5, wherein the lubrication device comprises a pressure controller for regulating the pressure of the fluid that excites the oil pump, which fluid preferably is gaseous.

7. Flow meter according to claim 4, 5 or 6, wherein the control device comprises means for regulating the supply of the fluid that excites the oil pump to the oil pump, which means for regulating the supply of the fluid that excites the oil pump preferably comprises a switch valve.

8. Flow meter according to any one of the preceding claims, wherein the oil reservoir comprises a measuring device for measuring the level of the oil in the oil reservoir, which measuring device preferably comprises a float level indicator for monitoring the level of oil in the oil reservoir, and which measuring device preferably comprises means for giving a signal to the control device when the level of oil in the oil reservoir is too low.

9. Flow meter according to any one of the preceding claims, wherein the control device is remote controllable.

10. Flow meter according to any one of the preceding claims, wherein the lubrication device forms a package that can be mounted as one unity on the meter housing.

11. Lubrication device for a flow meter according to any one of the preceding claims.
